# EUROPEAN PATENT APPLICATION

(11) **EP 3 144 839 A1**
(43) Date of publication of application: **22.03.2017**
(21) Application number: 15819473.8
(22) Date of filing: 01.07.2015
(51) Int. Cl.: G06F 21/55, G06F 13/00

(54) **DETECTION DEVICE, DETECTION METHOD AND DETECTION PROGRAM**

(30) Priority: 07.07.2014 JP 2014139796
(71) Applicant: Nippon Telegraph and Telephone Corporation, Tokyo 100-8116 (JP)
(72) Inventor: SUDO, Yuichi, Musashino-shi Tokyo 180-8585 (JP); HATO, Kunio, Musashino-shi Tokyo 180-8585 (JP); HAMADA, Takahiro, Musashino-shi Tokyo 180-8585 (JP); UENO, Masami, Musashino-shi Tokyo 180-8585 (JP); KITAZUME, Hideo, Musashino-shi Tokyo 180-8585 (JP)
(74) Representative: Hoffmann Eitle
(86) International application number: PCT/JP2015/069073
(87) International publication number: WO 2016/006520

(57) **Abstract**

To provide an unauthorized-access detection device (50) in which when a relationship between information regarding a request transmitted from a terminal operated by a user to a service server (10) that provides a service, which is acquired by a request acquisition unit (31), and information regarding a query transmitted from the service server (10) to a DB (20) that accumulates information regarding the service, which is acquired by a query acquisition unit (41), is different from a normal pattern, a detection unit (51) detects the query as unauthorized access to the DB (20).

## Description

### Field

The present invention relates to a detection device, a detection method, and a detection program.

### Background

Conventionally, as one of security measures that protect web applications from attacks abusing the vulnerability of the web applications, A WAF (Web Application Firewall) has been introduced. The WAF is provided between a client and a server to hold a signature of known unauthorized access. When relaying a request transmitted from the client, the WAF blocks a request matched with the signature to prevent an attack against the server.

### Citation List

### Non Patent Literature

Non Patent Literature 1: "Web Application Firewall (WAF) reader", [searched on 24th July, 2014], Internet <URL:http://www.ipa.go.jp/security/vuln/waf.html>

### Summary

### Technical Problem

However, according to conventional techniques, there is a problem that unknown unauthorized access to the server cannot be detected. For example, because the WAF needs to hold the signature of the known unauthorized access, the WAF cannot handle an unknown attack against the vulnerability (a zero-day attack). If such an attack is performed, the server may be taken over and remotely controlled. Because the server has a right of access to a database, if an attacker remotely controls the server to access the database, data in the database may be leaked and falsified.

Therefore, an object of the present invention is to detect unauthorized access to a database from a server by an attack conducted by an attacker.

### Solution to Problem

A detection device includes: a first acquisition unit that acquires first request information regarding a first request transmitted from a terminal operated by a user to a service server that provides a service; a second acquisition unit that acquires second request information regarding a second request transmitted from the service server to an accumulation device that accumulates information regarding the service; and a detection unit that detects the second request as unauthorized access to the accumulation device, when a relationship between the first request information and the second request information is different from a normal pattern.

### Advantageous Effects of Invention

According to the embodiments disclosed in the present application, it is possible to detect unauthorized access to a database from a server by an attack conducted by an attacker.

### Brief Description of Drawings

FIG. 1 is a configuration diagram illustrating an outline of a system to which an unauthorized-access detection device according to a first embodiment is applied.
FIG. 2 is a flowchart illustrating a process flow in the unauthorized-access detection device according to the first embodiment.
FIG. 3 is an explanatory diagram of an effect obtained by the unauthorized-access detection device according to the first embodiment.
FIG. 4 is a flowchart illustrating a process flow in an unauthorized-access detection device according to a second embodiment.
FIG. 5 is a configuration diagram illustrating an outline of a system to which an unauthorized-access detection device according to a third embodiment is applied.
FIG. 6 is a diagram illustrating an example of information to be stored in a body-text pattern storage unit according to the third embodiment.
FIG. 7 is a flowchart illustrating a process flow in the unauthorized-access detection device according to the third embodiment.
FIG. 8 is a diagram illustrating an example of information to be stored in a body-text pattern storage unit according to a fourth embodiment.
FIG. 9 is a flowchart illustrating a process flow in an unauthorized-access detection device according to the fourth embodiment.
FIG. 10 is a configuration diagram illustrating an outline of a system to which an unauthorized-access detection device according to a fifth embodiment is applied.
FIG. 11 is a diagram illustrating an example of information to be stored in a session information DB according to the fifth embodiment.
FIG. 12 is a diagram illustrating an example of information to be stored in a query-pattern storage unit according to the fifth embodiment.
FIG. 13 is a flowchart illustrating a process flow in the unauthorized-access detection device according to the fifth embodiment.
FIG. 14 is a configuration diagram illustrating an outline of a system to which an unauthorized-access detection device according to another embodiment is applied.
FIG. 15A is a configuration diagram illustrating an outline of a system to which the unauthorized-access detection device according to the another embodiment is applied.
FIG. 15B is a configuration diagram illustrating an outline of a system to which the unauthorized-access detection device according to the another embodiment is applied.
FIG. 16 is a diagram illustrating a computer that executes a detection program.

### Description of Embodiments

Exemplary embodiments of a detection device, a detection method, and a detection program according to the present application will be explained below in detail with reference to the accompanying drawings. The detection device, the detection method, and the detection program according to the present application are not limited to the embodiments.

### [First embodiment]

Hereinafter, in a first embodiment, a configuration of an unauthorized-access detection device according to the first embodiment and a process flow is described sequentially, and thereafter effects obtained by the unauthorized-access detection device are described.

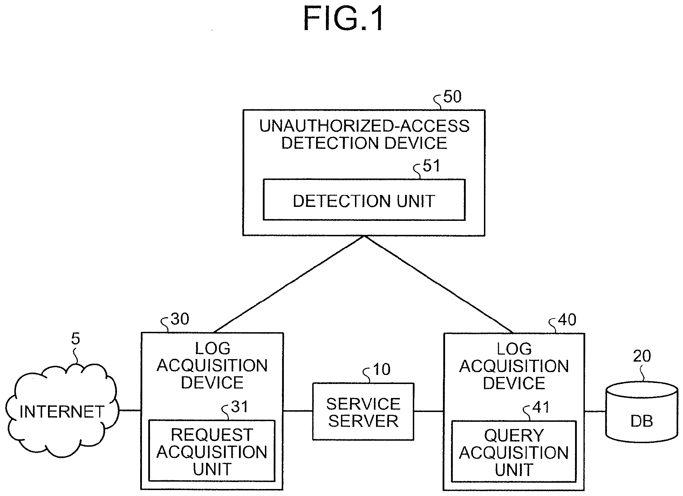

The configuration of the unauthorized-access detection device is described first with reference to FIG. 1. FIG. 1 is a configuration diagram illustrating an outline of a system to which the unauthorized-access detection device according to the first embodiment is applied. As illustrated in FIG. 1, the system includes a service server 10, a DB (database) 20, log acquisition devices 30 and 40, and an unauthorized-access detection device 50. The processes performed by these devices are described below.

The service server 10 is, for example, a web application server that provides various types of network services (hereinafter, simply "service"). For example, the service server 10 receives a request from a terminal (not illustrated) operated by a user via the Internet 5. The request is, for example, an HTTP (Hypertext Transfer Protocol) request or an HTTPS (Hypertext Transfer Protocol Secure) request. The service server 10 performs information processing according to the received request, and responds to the terminal.

When responding to the terminal, the service server 10 issues a query for requesting search, update, deletion, or the like of data as required and transmits the query to the DB 20. The service server 10 receives an execution result of the query from the DB 20 and responds to the terminal.

The DB 20 accumulates therein information regarding the service provided from the service server 10. For example, the DB 20 receives the query from the service server 10 and performs the process described in the query. The DB 20 transmits the execution result of the query to the service server 10. The format of the information held in the DB 20 is not limited to an SQL format, and can be managed in a KVS (Key-Value Store) format. In this case, a request transmitted from the service server 10 to the DB 20 is described not in the query but in the KVS format. The DB 20 is an example of an accumulation device.

The log acquisition devices 30 and 40 respectively acquire a log regarding communication and record the log. For example, the log acquisition device 30 acquires and records the log of communication of the service server 10 via the Internet 5. The log acquisition device 40 acquires and records a log of communication between the service server 10 and the DB 20. In the log acquisition devices 30 and 40, time synchronization is performed, for example, by an NTP (Network Time Protocol) or the like. Further, when the HTTPS request is used as the request, the body text of the request is coded. However, by setting the log acquisition device 30 as a reverse proxy of the service server 10, the request can be decoded by the log acquisition device 30, thereby enabling to transmit the request information to the unauthorized-access detection device 50.

The log acquisition device 30 includes a request acquisition unit 31 and the log acquisition device 40 includes a query acquisition unit 41.

The request acquisition unit 31 acquires request information that is information regarding the request transmitted from the terminal to the service server 10. The request acquisition unit 31 transmits the acquired request information to the unauthorized-access detection device 50. The request information transmitted to the unauthorized-access detection device 50 is recorded in a predetermined storage unit (not illustrated) in the unauthorized-access detection device 50. The request acquisition unit 31 is an example of a first acquisition unit.

For example, the request acquisition unit 31 acquires at least a reception time at which the request has been received by the service server 10 as the request information. Each time the reception time is acquired, the request acquisition unit 31 transmits the acquired reception time to the unauthorized-access detection device 50 so that the reception time is recorded in the storage unit. The request acquisition unit 31 can acquire not only the reception time of the request but also the body text of the request and an IP (Internet Protocol) address of a source user and transmit these pieces of information to the unauthorized-access detection device 50.

The query acquisition unit 41 acquires query information that is information regarding a query transmitted from the service server 10 to the DB 20. The query acquisition unit 41 transmits the acquired query information to the unauthorized-access detection device 50. The query information transmitted to the unauthorized-access detection device 50 is recorded in a predetermined storage unit (not illustrated) in the unauthorized-access detection device 50. The query acquisition unit 41 is an example of a second acquisition unit.

For example, the query acquisition unit 41 acquires at least a reception time at which the query has been received by the DB 20 as the query information. Each time the reception time is acquired, the query acquisition unit 41 transmits the acquired reception time to the unauthorized-access detection device 50 so that the reception time is recorded in the storage unit. The query acquisition unit 41 can acquire not only the reception time of the query but also the body text of the query and an IP address of a source server and transmit these pieces of information to the unauthorized-access detection device 50.

The unauthorized-access detection device 50 detects unauthorized access. For example, the unauthorized-access detection device 50 monitors information communicated between the Internet 5 and the DB 20 to detect unauthorized access to the DB 20. The unauthorized-access detection device includes a detection unit 51.

When a relationship between the request information and the query information is different from a normal pattern, the detection unit 51 detects the query as unauthorized access to the DB 20. For example, the detection unit 51 compares the reception time of the request with the reception time of the query. If the request is not received in a predetermined time immediately before the reception time of the query, the detection unit 51 regards the relationship between the request information and the query information as being different from the normal pattern, and detects the query as unauthorized access.

The reason why unauthorized access is detected in the manner described above is that there is a normal pattern in which a request has been received by the service server 10 before a query is issued by the service server 10, as the relationship between the request information and the query information. In other words, even if the request has not been received, if the query is received by the DB 20, the query can be regarded as unauthorized access. For example, in the case of the service server 10 in which an average time from reception of the request to transmission of the query is 0.1 second, in the normal pattern, a request is received in one second from one second before the reception time of the query to the reception time of the query. In this case, if the request is not received by one second before the reception time of the query, the detection unit 51 regards the relationship between the request information and the query information as being different from the normal pattern and detects the query as unauthorized access. A case where the predetermined time is one second has been described here. However, this value can be arbitrarily set by an administrator of the unauthorized-access detection device 50 according to the performance of the service server 10 or the like (or the load status of the DB 20, the congestion status of the network, or the like).

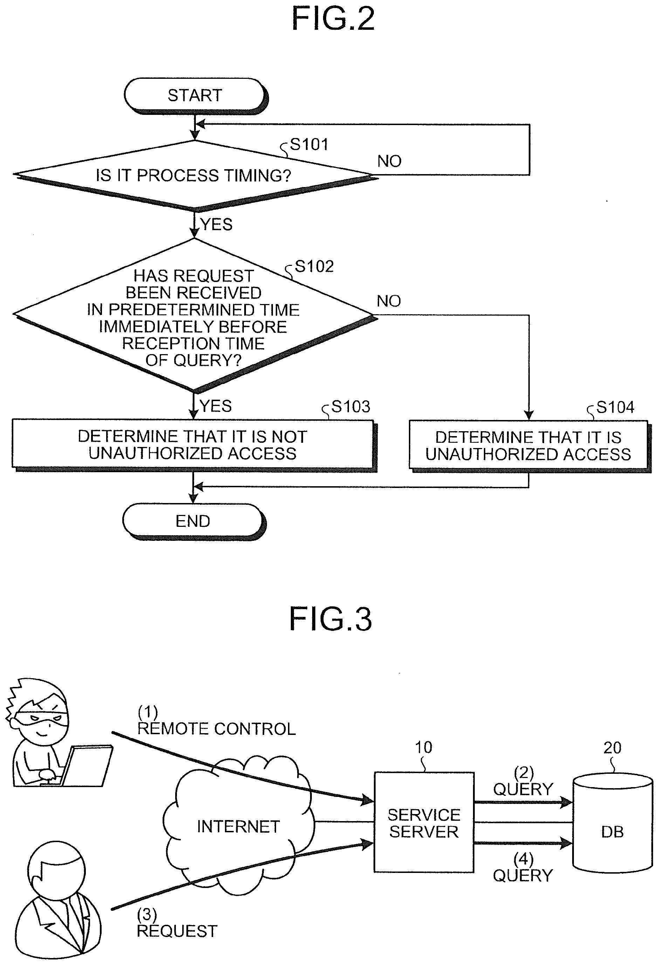

A process flow in the unauthorized-access detection device 50 is described next with reference to FIG. 2. FIG. 2 is a flowchart illustrating the process flow in the unauthorized-access detection device according to the first embodiment.

As illustrated in FIG. 2, the detection unit 51 of the unauthorized-access detection device 50 starts a process at a process timing (YES at Step S101). For example, the detection unit 51 starts the process when a query is acquired from the log acquisition device 40. The detection unit 51 is in a standby state until it becomes the process timing (NO at Step S101).

Subsequently, the detection unit 51 determines whether a request has been received in a predetermined time immediately before a reception time of the query (Step S102). For example, if the reception time of the query received by the DB 20 is 8:22:10, the detection unit 51 determines whether the request has been received by the service server 10 in a period from 8:22:09 to 8:22:10. If the request has been received in the predetermined time immediately before the reception time of the query (YES at Step S102), the detection unit 51 determines that the query is not unauthorized access (Step S103).

On the other hand, if the request has not been received in the predetermined time immediately before the reception time of the query (NO at Step S102), the detection unit 51 determines that the query is unauthorized access (Step S104).

The example illustrated in FIG. 2 is only an example. For example, the detection unit 51 can start the process illustrated in FIG. 2 at a predetermined interval (for example, at an interval of one second). In this case, the processes described above (Steps S102 to S104) are performed for all the queries acquired immediately after completion of the previous process to the present time (the start time of the current process).

The unauthorized-access detection device 50 according to the first embodiment acquires request information regarding a request transmitted from the terminal to the service server 10. The unauthorized-access detection device 50 acquires query information regarding the query transmitted from the service server 10 to the DB 20. When the relationship between the request information and the query information is different from the normal pattern of the request in which the query is issued, the unauthorized-access detection device 50 detects the query as unauthorized access to the DB 20. Therefore, the unauthorized-access detection device 50 can detect unauthorized access to the database from the server by an attack conducted by an attacker.

FIG. 3 is an explanatory diagram of an effect obtained by the unauthorized-access detection device according to the first embodiment. As illustrated in FIG. 3, an attacker who has succeeded in remote control of the server by the zero-day attack remotely controls the service server 10 (1) to issue a query to the DB 20 (2), thereby collecting and falsifying the information stored in the DB 20. Normally, a user accesses the information stored in the DB 20 by transmitting a request to the service server 10 (3) so as to issue a query to the DB 20 (4). The unauthorized-access detection device 50 according to the first embodiment determines whether the query is normal based on the relationship between the request and the query at the normal time, that is, based on the normal pattern. Therefore, the unauthorized-access detection device 50 can handle the zero-day attack. For example, even if an attacker who has passed the WAF causes the service server 10 to issue an unauthorized query, if the query is not based on the request from the user, the unauthorized-access detection device 50 can detect the query as unauthorized access. Further, by investigating an access log around the detection time automatically or manually by known means, the unauthorized-access detection device 50 can specify the attacker.

For example, the unauthorized-access detection device 50 according to the first embodiment acquires the request information and the query information from the individual log acquisition devices 30, 40 different from the service server 10. Accordingly, even if the service server 10 is taken over by an unknown attacker, the unauthorized-access detection device 50 can acquire the request information and the query information, thereby enabling to detect unauthorized access.

### [Second embodiment]

According to the first embodiment described above, a case where unauthorized access is detected based on a normal pattern in which a request has been received in a predetermined time immediately before the reception time of the query has been described. However, the embodiment of the present invention is not limited thereto. For example, according to a system to which the unauthorized-access detection device 50 is applied, there may be a pattern in which a ratio of the number of queries to the number of requests in a predetermined period is approximately constant. When the unauthorized-access detection device 50 is applied to such a system, the pattern can be designated as the normal pattern and the unauthorized-access detection device 50 can detect unauthorized access. Therefore, in a second embodiment, a case where if the ratio of the number of queries to the number of requests in a predetermined period exceeds a threshold, the unauthorized-access detection device 50 detects these queries as unauthorized access is described.

The unauthorized-access detection device 50 according to the second embodiment has the same configuration as that of the unauthorized-access detection device 50 illustrated in FIG. 1, but a part of the process performed by the detection unit 51 is different therefrom. In the second embodiment, parts different from the first embodiment are mainly described, and as for parts having identical functions to those of configurations described in the first embodiment, explanations thereof will be omitted.

The detection unit 51 according to the second embodiment counts the number of requests and the number of queries received in a predetermined period, respectively. If the ratio of the number of queries to the number of requests exceeds a predetermined threshold, the detection unit 51 regards the relationship between the request information and the query information as being different from the normal pattern, and detects these queries as unauthorized access.

The reason why unauthorized access is detected in the manner described above is that there is a normal pattern in which the ratio of the number of queries to the number of requests in a predetermined period (hereinafter, also "query issuance rate") is approximately constant, as the relationship between the request information and the query information. In other words, if the number of queries is too many with respect to the number of requests in the same period, it can be understood that unauthorized access is included in these queries. For example, in the service server 10 that has the query issuance rate of about 0.1 (one query is issued with respect to 10 requests), if there is a period in which the query issuance rate has increased to about 0.3, the detection unit 51 regards the relationship between the request information and the query information as being different from the normal pattern, to detect that there is a query due to unauthorized access among the queries issued in the period. A case where the threshold is 0.3 is described here. However, the threshold can be arbitrarily set by the administrator of the unauthorized-access detection device 50.

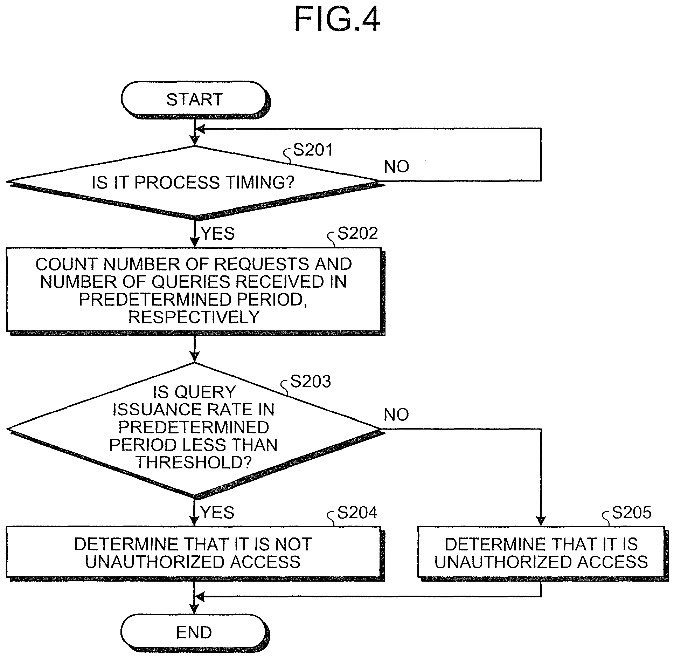

A process flow in the unauthorized-access detection device 50 according to the second embodiment is described next with reference to FIG. 4. FIG. 4 is a flowchart illustrating the process flow in the unauthorized-access detection device according to the second embodiment.

As illustrated in FIG. 4, the detection unit 51 of the unauthorized-access detection device 50 starts a process at a process timing (YES at Step S201). For example, the detection unit 51 starts the process at a predetermined interval (for example, at an interval of one second). The detection unit 51 is in a standby state until it becomes the process timing (NO at Step S201).

Subsequently, the detection unit 51 counts the number of requests and the number of queries received in a predetermined period, respectively (Step S202). For example, the detection unit 51 respectively calculates the number of requests received by the service server 10 and the number of queries received by the DB 20 in one second immediately before.

The detection unit 51 determines whether a query issuance rate in the predetermined period is less than a threshold (Step S203). For example, if the number of requests is "100" and the number of queries is "50" counted at Step S202, the detection unit 51 calculates that the query issuance rate is "0.5". The detection unit 51 then determines whether the calculated query issuance rate "0.5" is less than the threshold. If the query issuance rate in the predetermined period is less than the threshold (YES at Step S203), the detection unit 51 determines that queries in the period are not unauthorized access (Step S204).

On the other hand, if the query issuance rate in the predetermined period is equal to or higher than the threshold (NO at Step S203), the detection unit 51 determines that there is a query due to unauthorized access among the queries issued in the period(Step S205).

The example illustrated in FIG. 4 is only an example. For example, an interval to start the process, the period in which the request and the query are counted, and the threshold can be appropriately changed by the administrator of the unauthorized-access detection device 50.

The unauthorized-access detection device 50 according to the second embodiment counts the number of requests and the number of queries received in the predetermined period, respectively, and if the ratio of the number of queries to the number of requests exceeds the predetermined threshold, the unauthorized-access detection device 50 regards the relationship between the request information and the query information as being different from the normal pattern, and detects that there is a query due to unauthorized access among these queries. Therefore, the unauthorized-access detection device 50 can detect unauthorized access to the database from the server by an attack conducted by an attacker. For example, the unauthorized-access detection device 50 can detect an unauthorized query even in a large-scale system that receives 100 requests in one second.

### [Third embodiment]

For example, the unauthorized-access detection device 50 can detect unauthorized access based on a normal pattern in which a query is issued in a body text pattern corresponding to a body text pattern of a request.

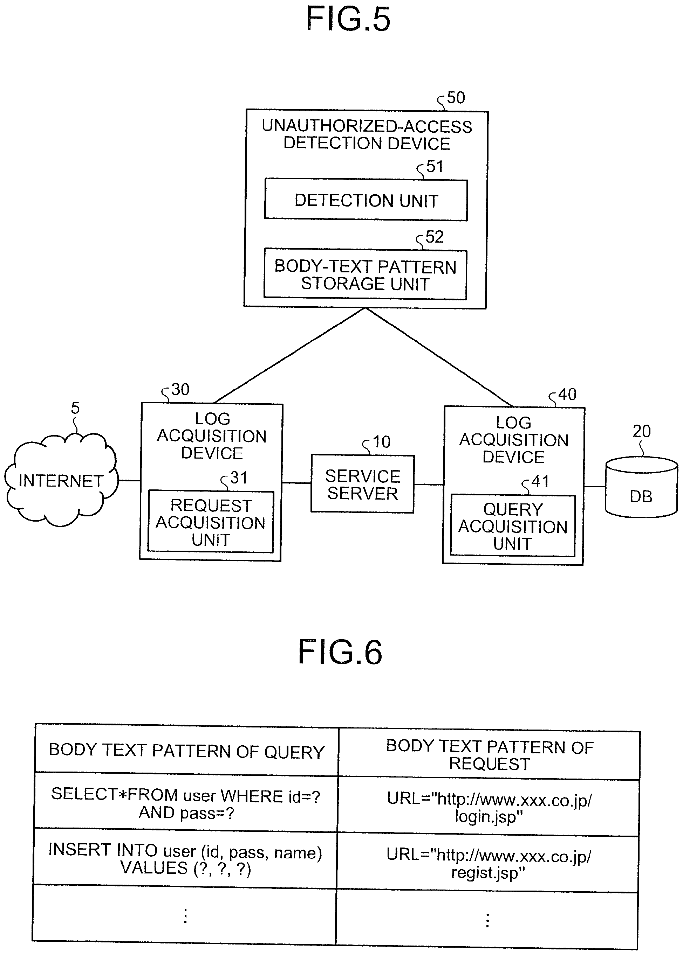

FIG. 5 is a configuration diagram illustrating an outline of a system to which an unauthorized-access detection device according to a third embodiment is applied. The unauthorized-access detection device 50 according to the third embodiment has basically the same configuration as that of the unauthorized-access detection device 50 illustrated in FIG. 1. However, the unauthorized-access detection device 50 according to the third embodiment is different from the unauthorized-access detection device 50 illustrated in FIG. 1 in a part of the processes performed by the request acquisition unit 31, the query acquisition unit 41, and the detection unit 51 and in that a body-text pattern storage unit 52 is further provided. In the third embodiment, parts different from the first embodiment are mainly described, and as for parts having identical functions to those of configurations described in the first embodiment, respective constituent elements of FIG. 5 are denoted by like reference signs of FIG. 1 and explanations thereof will be omitted.

The request acquisition unit 31 according to the third embodiment acquires at least the reception time of a request and the body text of the request as the request information, and transmits the request information to the unauthorized-access detection device 50.

The query acquisition unit 41 according to the third embodiment acquires at least the reception time of a query and the body text of the query as the query information, and transmits the query information to the unauthorized-access detection device 50.

The body-text pattern storage unit 52 according to the third embodiment stores therein information in which a body text pattern of the request and a body text pattern of the query are associated with each other. The body text pattern of the request is such that a character string of a portion predetermined according to the type of the request such as a log-in request and a data registration request, of the character strings of the request, is patterned. The body text pattern of the query is such that a character string of a portion predetermined according to the type of the query, of the character strings of the query to be transmitted from the service server 10 to the DB 20 when the corresponding request is received by the service server 10, is patterned. It is assumed that the information to be stored in the body-text pattern storage unit 52 is registered beforehand by the administrator of the unauthorized-access detection device 50.

FIG. 6 is a diagram illustrating an example of information to be stored in the body-text pattern storage unit according to the third embodiment. As illustrated in FIG. 6, the body-text pattern storage unit 52 stores therein information in which, for example, a body text pattern of the query [SELECT * FROM user WHERE id = ? AND pass = ?] is associated with a body text pattern of the request [URL="http://www.xxx.co.jp/login.jsp"]. In FIG. 6, "?" is an arbitrary character string.

The detection unit 51 according to the third embodiment refers to the body-text pattern storage unit 52, and if the request having a body text pattern corresponding to the body text pattern of the query acquired by the query acquisition unit 41 has not been received in a predetermined time immediately before the reception time of the query, the detection unit 51 regards the relationship between the request information and the query information as being different from the normal pattern, and detects the query as unauthorized access.

The reason why unauthorized access is detected in the manner described above is that there is the normal pattern in which a query in the body text pattern corresponding to the body text pattern of a request is issued, as the relationship between the request information and the query information such that, for example, when a log-in request is received, a query for log-in authentication is issued. In other words, if a request in the body text pattern corresponding to the body text pattern of the query transmitted to the DB 20 has not been received by the service server 10, the query can be regarded as unauthorized access. For example, even if a request has been received in one second immediately before the reception time of the query, if the body text patterns thereof do not correspond to each other, the detection unit 51 regards the relationship between the request information and the query information as being different from the normal pattern and detects the query as unauthorized access.

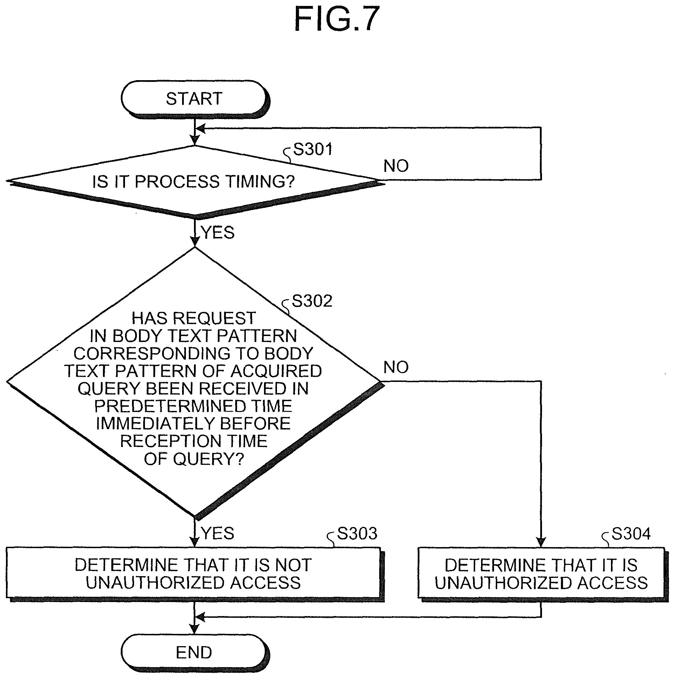

A process flow in the unauthorized-access detection device 50 according to the third embodiment is described next with reference to FIG. 7. FIG. 7 is a flowchart illustrating the process flow in the unauthorized-access detection device according to the third embodiment.

As illustrated in FIG. 7, the detection unit 51 of the unauthorized-access detection device 50 starts a process at a process timing (YES at Step S301). For example, the detection unit 51 starts the process upon acquisition of a query from the log acquisition device 40. The detection unit 51 is in a standby state until it becomes the process timing (NO at Step S301).

Subsequently, the detection unit 51 determines whether the request in the body text pattern corresponding to the body text pattern of the acquired query has been received in a predetermined time immediately before the reception time of the query (Step S302). For example, if a query for log-in authentication has been received at 8:22:10, the detection unit 51 determines whether a log-in request has been received by the service server 10 in a period from 8:22:09 to 8:22:10. If the log-in request has been received (YES at Step S302), the detection unit 51 determines that the query is not unauthorized access (Step S303).

On the other hand, if the log-in request has not been received (NO at Step S302), the detection unit 51 determines that the query is unauthorized access (Step S304).

The example illustrated in FIG. 7 is only an example. For example, the detection unit 51 can start the process illustrated in FIG. 7 at a predetermined interval (for example, at an interval of one second). In this case, the processes described above (Steps S302 to S304) are performed for all the queries acquired immediately after completion of the previous process to the present time (the start time of the current process).

If the request in the body text pattern corresponding to the body text pattern of the query acquired by the query acquisition unit 41 has not been received in a predetermined time immediately before the reception time of the query, the unauthorized-access detection device 50 according to the third embodiment regards the relationship between the request information and the query information as being different from the normal pattern and detects the query as unauthorized access. Therefore, the unauthorized-access detection device 50 can detect unauthorized access to the DB 20 from the server by an attack conducted by an attacker.

For example, even if a request has been received in one second immediately before the reception time of the query, if the body text patterns of the request and the query do not correspond to each other, the detection unit 51 regards the relationship between the request information and the query information as being different from the normal pattern and detects the query as unauthorized access. Therefore, the unauthorized-access detection device 50 can detect unauthorized access accurately.

### [Fourth embodiment]

In the second embodiment described above, a case where if the ratio of the number of queries to the number of requests in the predetermined period exceeds the threshold, it is detected that there is a query due to unauthorized access in these queries has been described. However, the embodiment of the present invention is not limited thereto. For example, the unauthorized-access detection device 50 can detect unauthorized access by using body text patterns of requests and queries.

The unauthorized-access detection device 50 according to a fourth embodiment has the same configuration as that of the unauthorized-access detection device 50 illustrated in FIG. 5. However, the unauthorized-access detection device 50 according to the fourth embodiment is different from the unauthorized-access detection device 50 illustrated in FIG. 5 in a part of the information stored in the body-text pattern storage unit 52 and a part of the process performed by the detection unit 51. In the fourth embodiment, parts different from the third embodiment are mainly described, and as for parts having identical functions to those of configurations described in the third embodiment, explanations thereof will be omitted.

The body-text pattern storage unit 52 according to the fourth embodiment stores therein information in which a body text pattern of a request, a body text pattern of a query, and a threshold are associated with each other. The threshold is a value determined based on, for example, a query issuance rate.

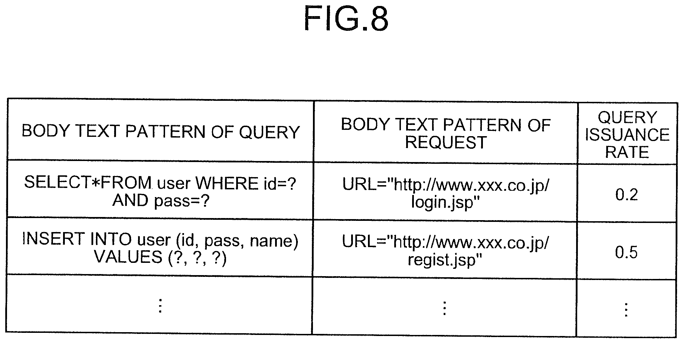

FIG. 8 is a diagram illustrating an example of information stored in the body-text pattern storage unit according to the fourth embodiment. As illustrated in FIG. 8, the body-text pattern storage unit 52 stores therein information in which, for example, a body text pattern of the query [SELECT * FROM user WHERE id = ? AND pass = ?], a body text pattern of the request [URL="http://www.xxx.co.jp/login.jsp"], and a threshold [0.2] of the query issuance rate are associated with each other. In FIG. 8, "?" is an arbitrary character string.

The detection unit 51 according to the fourth embodiment refers to the body-text pattern storage unit 52 to count the number of queries in a predetermined body text pattern received in a predetermined period, and the number of requests corresponding to the predetermined body text pattern received in the same period, respectively. If the ratio of the number of queries to the number of requests (the query issuance rate) exceeds the threshold corresponding to the predetermined body text pattern, the detection unit 51 regards the relationship between the request information and the query information as being different from the normal pattern and detects the query as unauthorized access.

The reason why the unauthorized access is detected in the manner described above is that even if the query issuance rate in the predetermined period corresponds to the normal pattern, the queries in the period may be possibly the unauthorized access. For example, even if unauthorized access is being performed, if requests unaccompanied by query issuance increase in the period, it is understood that there is no remarkable change in the apparent query issuance rate. Therefore, in the fourth embodiment, by taking into consideration the normal pattern in the body text patterns of the request and the query in addition to the normal pattern of the query issuance rate, unauthorized access can be detected accurately. As described in the second embodiment, the threshold of the query issuance rate can be arbitrarily set by the administrator of the unauthorized-access detection device 50.

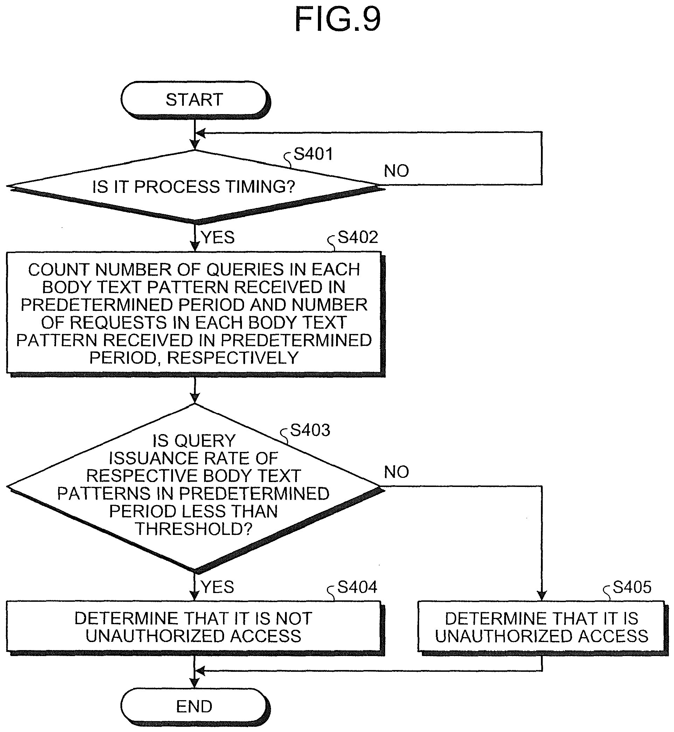

A process flow in the unauthorized-access detection device 50 according to the fourth embodiment is described next with reference to FIG. 9. FIG. 9 is a flowchart illustrating the process flow in the unauthorized-access detection device according to the fourth embodiment.

As illustrated in FIG. 9, the detection unit 51 of the unauthorized-access detection device 50 starts a process at a process timing (YES at Step S401). For example, the detection unit 51 starts the process at a predetermined interval (for example, at an interval of one second). The detection unit 51 is in a standby state until it becomes the process timing (NO at Step S401).

Subsequently, the detection unit 51 counts the number of requests in each body text pattern received in a predetermined period and the number of queries in each body text pattern received in the predetermined period (Step S402), respectively. For example, the detection unit 51 counts the number of log-in requests received by the service server 10 in one second immediately before and the number of queries for log-in authentication received by the DB 20 in the same period of time, respectively.

The detection unit 51 then determines whether the query issuance rate of each body text pattern in the predetermined period is less than the threshold (Step S403). For example, if the number of requests calculated at Step S402 is "10" and the number of queries is "5", the detection unit 51 calculates the query issuance rate as "0.5". The detection unit 51 then determines whether the calculated query issuance rate "0.5" is less than the threshold. If the query issuance rate of each body text pattern in the predetermined period is less than the threshold (YES at Step S403), the detection unit 51 determines that the queries in the period are not unauthorized access (Step S404).

On the other hand, if the query issuance rate of each body text pattern in the predetermined period is equal to or more than the threshold (NO at Step S403), the detection unit 51 determines that there is a query due to unauthorized access among the queries of the body issued in the period (Step S405).

The example illustrated in FIG. 9 is only an example. For example, the interval to start the process, the period for counting the requests and the queries, and the threshold can be appropriately changed by the administrator of the unauthorized-access detection device 50.

The unauthorized-access detection device 50 according to the fourth embodiment refers to the body-text pattern storage unit 52 to count the number of queries in the predetermined body text pattern received in the predetermined period, and the number of requests corresponding to the predetermined body text pattern received in the same period, respectively. If the ratio of the number of queries to the number of requests (the query issuance rate) exceeds the threshold corresponding to the predetermined body text pattern, the detection unit 51 regards the relationship between the request information and the query information as being different from the normal pattern and detects the query included in the period as unauthorized access. Accordingly, the unauthorized-access detection device 50 can detect unknown unauthorized access to the DB 20. For example, the unauthorized-access detection device 50 can detect an unauthorized query accurately even in a large-scale system that receives 100 requests in one second.

### [Fifth embodiment]

In a fifth embodiment, a case where unauthorized access is detected by using information of user terminal actually connected to the service server 10 is described.

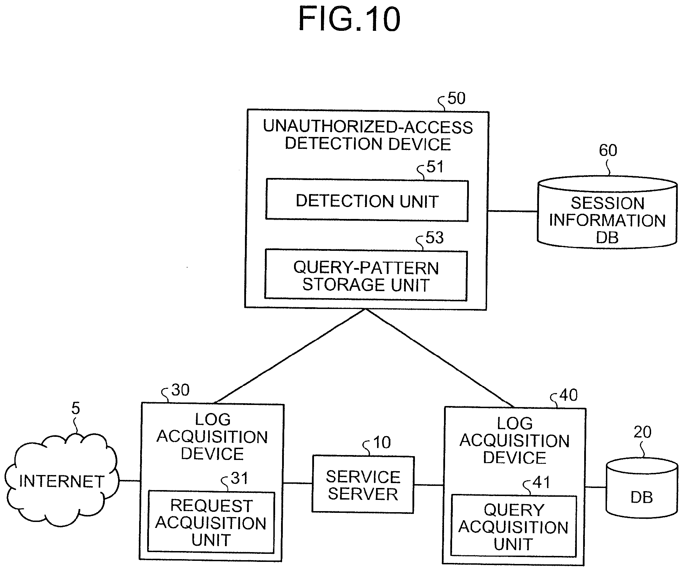

FIG. 10 is a configuration diagram illustrating an outline of a system to which an unauthorized-access detection device according to the fifth embodiment is applied. The system to which the unauthorized-access detection device 50 according to the fifth embodiment is applied has basically the same configuration as that of the unauthorized-access detection device 50 illustrated in FIG. 1. However, the unauthorized-access detection device 50 according to the fifth embodiment is different from the unauthorized-access detection device 50 illustrated in FIG. 1 in a part of the processes performed by the request acquisition unit 31, the query acquisition unit 41, and the detection unit 51 and in that a query-pattern storage unit 53 and a session information DB 60 are further provided. In the fifth embodiment, parts different from the first embodiment are mainly described, and as for parts having identical functions to those of configurations described in the first embodiment, respective constituent elements of FIG. 10 are denoted by like reference signs of FIG. 1 and explanations thereof will be omitted.

The request acquisition unit 31 according to the fifth embodiment acquires at least the reception time of the request and the body text of the request as the request information and transmits the request information to the unauthorized-access detection device 50.

The query acquisition unit 41 according to the fifth embodiment acquires at least the reception time of the query and the body text of the query as the query information and transmits the query information to the unauthorized-access detection device 50.

The session information DB 60 according to the fifth embodiment stores therein information regarding the user terminal connected to the service server 10. For example, the session information DB 60 stores therein information in which a session ID and a user ID are associated with each other. The session ID is information for identifying a terminal connected to the service server 10. The user ID is information for identifying a user who uses a service provided by the service server 10.

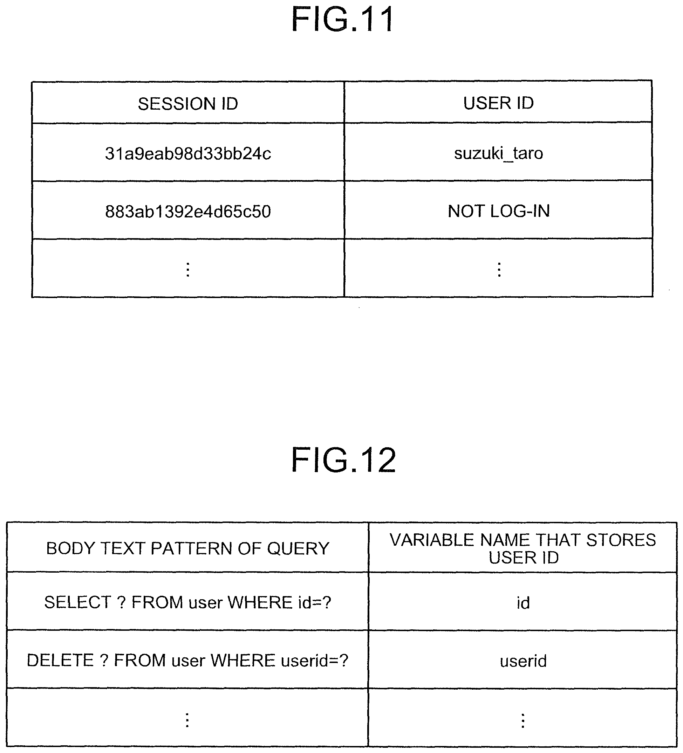

FIG. 11 is a diagram illustrating an example of information stored in the session information DB according to the fifth embodiment. As illustrated in FIG. 11, the session information DB 60 stores therein information in which, for example, a session ID [31a9eab98d33bb24c] and a user ID [suzuki_taro] are associated with each other. The information to be stored in the session information DB 60 is registered by the service server 10, for example, when a session is established between the user terminal and the service server 10.

The query-pattern storage unit 53 according to the fifth embodiment stores therein information in which the body text pattern of the query and a variable name that stores the user ID are associated with each other. The variable name that stores the user ID is information indicating a place where the user ID is described in a query in a corresponding body text pattern.

FIG. 12 is a diagram illustrating an example of information stored in the query-pattern storage unit according to the fifth embodiment. As illustrated in FIG. 12, the query-pattern storage unit 53 stores therein information in which, for example, the body text pattern of the query [SELECT ? FROM user WHERE id = ?] is associated with a variable name [id] that stores the user ID. The information stored in the query-pattern storage unit 53 is registered beforehand, for example, by the administrator of the unauthorized-access detection device 50. In FIG. 12, "?" is an arbitrary character string.

The detection unit 51 according to the fifth embodiment specifies the session ID from the user ID included in the query, and if a request including the specified session ID has not been received in a predetermined time immediately before the reception time of the query, the detection unit 51 regards the relationship between the request information and the query information as being different from the normal pattern and detects the query as unauthorized access.

The reason why unauthorized access is detected in the manner described above is that there is a normal pattern in which the session ID of a user specified from the query matches the session ID included in the request transmitted for issuing the query, as the relationship between the request information and the query information. Accordingly, the detection unit 51 can detect unauthorized access more reliably. Normally, the session ID is described in a cookie or a URL (Uniform Resource Locator) portion in the body text of the HTTP request.

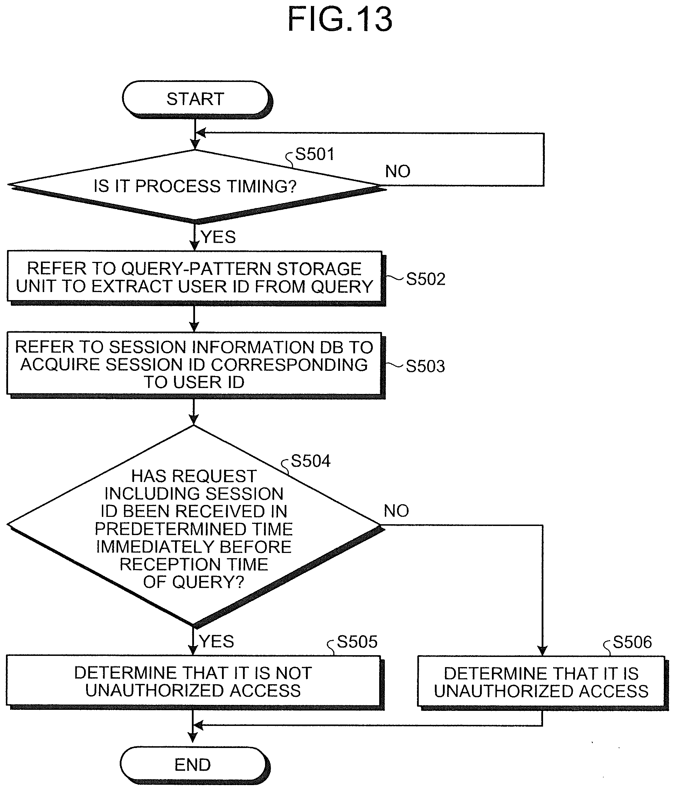

A process flow in the unauthorized-access detection device 50 according to the fifth embodiment is described next with reference to FIG. 13. FIG. 13 is a flowchart illustrating the process flow in the unauthorized-access detection device according to the fifth embodiment. In the example illustrated in FIG. 13, a case where the body text of the acquired query is [SELECT creditcard FROM user WHERE id= suzuki_taro] is described.

As illustrated in FIG. 13, the detection unit 51 of the unauthorized-access detection device 50 starts a process at a process timing (YES at Step S501). For example, the detection unit 51 starts the process at a predetermined interval (for example, at an interval of one second). The detection unit 51 is in a standby state until it becomes the process timing (NO at Step S501).

Subsequently, the detection unit 51 refers to the query-pattern storage unit 53 to extract a user ID from the acquired query (Step S502). For example, the detection unit 51 refers to the query-pattern storage unit 53 to specify a body text pattern corresponding to the body text of the acquired query. Because the body text of the received query is [SELECT creditcard FROM user WHERE id= suzuki_taro], the detection unit 51 specifies [SELECT ? FROM user WHERE id=?] as the body text pattern of the query. Subsequently, the detection unit 51 acquires a variable name that stores the user ID corresponding to the specified body text pattern. In the example illustrated in FIG. 12, because the variable name that stores the user ID corresponding to the body text pattern of the query [SELECT ? FROM user WHERE id=?] is [id], the detection unit 51 acquires [id]. The detection unit 51 extracts the user ID from the body text of the query by using the variable name that stores the acquired user ID. In the body text of the query, because [suzuki_taro] is described in the [id], the detection unit 51 extracts [suzuki_taro] as the user ID from the body text of the query.

Subsequently, the detection unit 51 refers to the session information DB to acquire the session ID corresponding to the user ID (Step S503). For example, the detection unit 51 refers to the session information DB 60 to acquire the session ID [31a9eab98d33bb24c] corresponding to the user ID [suzuki_taro] extracted at Step S502.

The detection unit 51 then determines whether a request including the session ID has been received in a predetermined time immediately before the reception time of the query (Step S504). For example, if the reception time of the query received by the DB 20 is 8:22:10, the detection unit 51 determines whether a request including the session ID [31a9eab98d33bb24c] has been received by the service server 10 in a period from 8:22:09 to 8:22:10. If the request has been received in the predetermined time immediately before the reception time of the query (YES at Step S504), the detection unit 51 determines that the query is not unauthorized access (Step S505).

On the other hand, if the request has not been received in the predetermined time immediately before the reception time of the query (NO at Step S504), the detection unit 51 determines that the query is unauthorized access (Step S506).

The example illustrated in FIG. 13 is only an example. For example, the detection unit 51 can start the process in FIG. 13 upon acquisition of the query from the log acquisition device 40.

The unauthorized-access detection device 50 according to the fifth embodiment detects unauthorized access by using the information of the user terminal actually connected to the service server 10. Accordingly, the unauthorized-access detection device 50 can detect unauthorized access more reliably. For example, the unauthorized-access detection device 50 can detect unauthorized access highly accurately, even in a large-scale system that receives 1000 requests in one second.

### [Other embodiments]

While embodiments of the present invention have been described above, the present invention can be realized in various different modes other than the embodiments described above.

### [Application to load balancer]

For example, in the first to fifth embodiments described above, a case where the service server 10 functions individually has been described. However, the present invention is also applicable to a case where a plurality of service servers 10 are arranged to distribute a load.

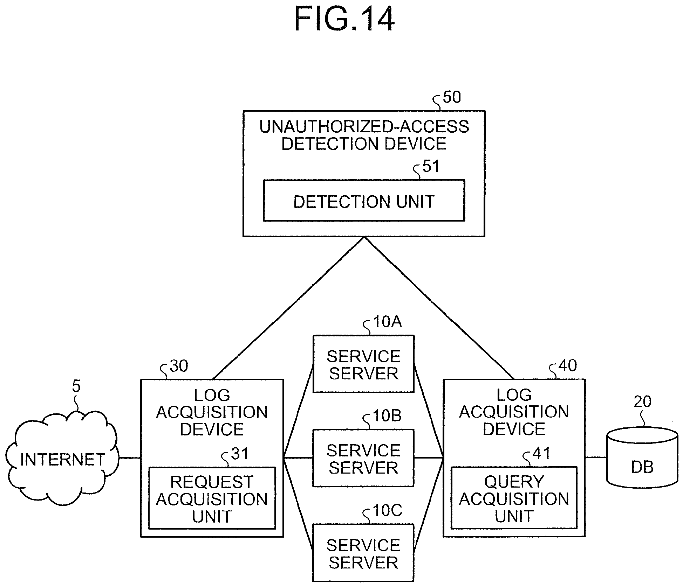

FIG. 14 is a configuration diagram illustrating an outline of a system to which the unauthorized-access detection device according to another embodiment is applied. As illustrated in FIG. 14, this system includes three service servers 10A, 10B, and 10C to provide the service.

In this case, the log acquisition device 30 functions as an LB (Load Balancer). For example, when transferring a request transmitted from the user terminal to any of the service servers 10A, 10B, and 10C, the log acquisition device 30 refers to the load status of the service servers 10A, 10B, and 10C and transfers the request to the service server 10 having a less load. The request acquisition unit 31 also acquires an address of a destination service server of the request as the request information and transmits the address to the unauthorized-access detection device 50. The query acquisition unit 41 also acquires an address of a source service server of the query as the query information and transmits the address to the unauthorized-access detection device 50.

The detection unit 51 performs a process of detecting unauthorized access for each acquired address of the request and the query. For example, if the source of the acquired query is the service server 10A, the detection unit 51 determines whether a request with the destination address being the service server 10A is included in a predetermined time immediately before the reception time of the query. In other words, if the source of the acquired query is the service server 10A, the detection unit 51 performs the detection process of unauthorized access without designating the request with the destination address being the service server 10B or 10C as a processing target. Therefore, the unauthorized-access detection device 50 can detect unknown unauthorized access more accurately.

In this manner, when there are a plurality of service servers 10, by classifying the correspondence between the query and the request to the DB 20 for each server through which the query and the request are transmitted, detection performance can be improved. For example, when the present embodiment is applied to the first, third, and fifth embodiments described above, if the service server to which the request has been distributed by the log acquisition device 30 and the service server that has issued the query are different, unauthorized access can be detected. When the present embodiment is applied to the second and fourth embodiments, because a ratio of the number of HTTP requests to a certain service server distributed by the log acquisition device 30 and the number of issuance of the query from the service server is largely different for each service server, unauthorized access can be detected. Particularly, when the ratio is prominent in some service servers, it can be detected that there is a high possibility that the service server has been taken over and an unauthorized query has been issued.

### [System configuration and the like]

The respective constituent elements of the respective devices illustrated in the drawings are functionally conceptual, and physically the same configuration is not always necessary. That is, the specific mode of distribution and integration of the respective devices is not limited to the illustrated ones, and all or a part thereof can be functionally or physically distributed or integrated in an arbitrary unit, according to various kinds of load and the status of use. Furthermore, all or an arbitrary part of each processing function carried out by respective devices can be realized by a CPU or by a program analyzed and executed in the CPU or the corresponding CPU, or can be realized as hardware by a wired logic.

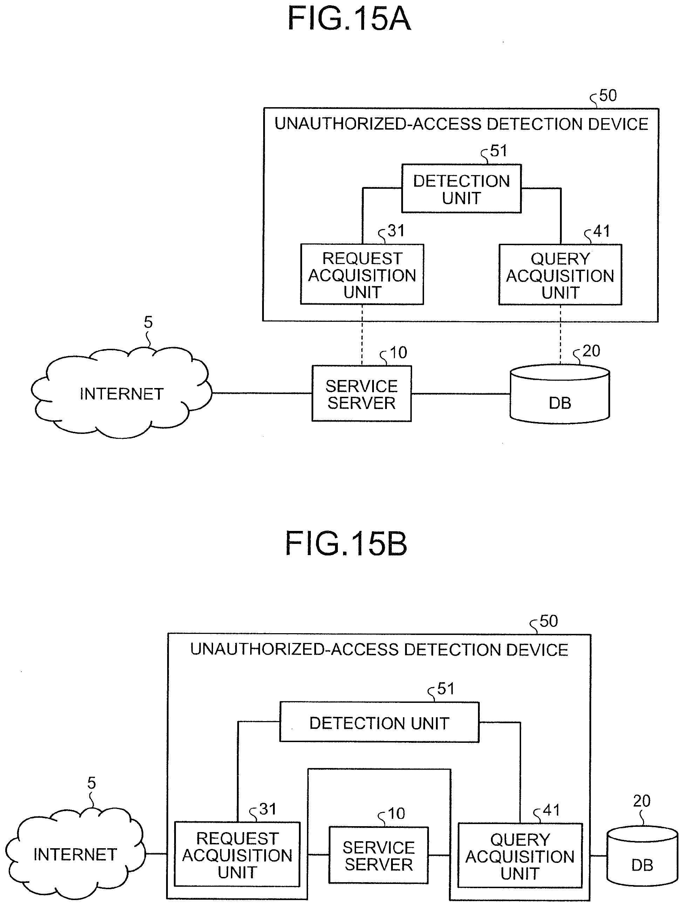

FIG. 15A and FIG. 15B are configuration diagrams illustrating an outline of a system to which the unauthorized-access detection device according to the another embodiment is applied. For example, as illustrated in FIG. 15A, the unauthorized-access detection device 50 can include the request acquisition unit 31 and the query acquisition unit 41 in addition to the detection unit 51. In this case, the request acquisition unit 31 acquires the request information from the service server 10 and the query acquisition unit 41 acquires the query information from the DB 20.

For example, as illustrated in FIG. 15B, the unauthorized-access detection device 50 can be configured to relay communication between the service server 10 and the Internet 5 and between the service server 10 and the DB 20. In other words, the service server 10 and the DB 20 are connected to the Internet 5 via the unauthorized-access detection device 50.

The examples illustrated in FIG. 15A and FIG. 15B are only examples. For example, it is not always necessary that the request acquisition unit 31, the query acquisition unit 41, and the detection unit 51 are included in one device, and any of these units can be configured to be separated as another device. As an example, the request acquisition unit 31 can be configured to relay communication between the service server 10 and the Internet 5 as a different device from the unauthorized-access detection device 50 (for example, as the log acquisition device 30 in FIG. 1). In this case, the unauthorized-access detection device 50 includes the query acquisition unit 41 and the detection unit 51. In this manner, the request acquisition unit 31, the query acquisition unit 41, and the detection unit 51 can be arbitrarily configured to be combined.

Among respective processes described in the present embodiment, all or a part of the processes described as being performed automatically can be performed manually, or all or a part of the processes described as being performed manually can be performed automatically with a known method. In addition, process procedures, control procedures, specific names, and information including various kinds of data and parameters mentioned in the above descriptions and drawings can be arbitrarily changed unless otherwise specified.

### [Program]

A program described in a language executable by a computer can be prepared for the process performed by the detection device described in the embodiments described above. For example, a detection program described in a language executable by a computer can be prepared for the process performed by the detection device according to the embodiments described above. In this case, as the computer executes the detection program, effects identical to those of the embodiments described above can be acquired. Further, processes identical to those of the embodiments described above can be realized by recording the detection program in a recording medium that can be read by a computer and causing the computer to read the detection program recorded in the recording medium and execute the detection program. An example of a computer that executes a detection program that realizes the similar function to that of the detection device illustrated in FIG. 1 is described below.

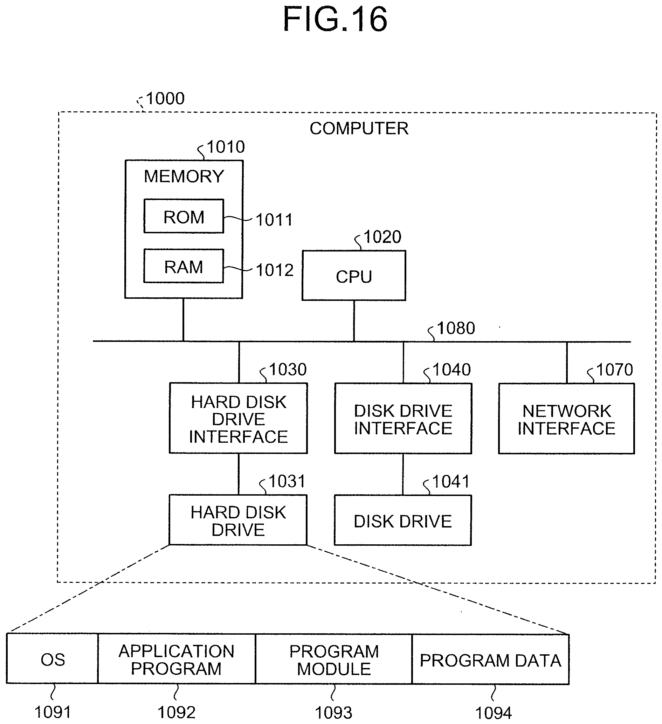

FIG. 16 is a diagram illustrating a computer that executes a detection program. As illustrated in FIG. 16, a computer 1000 includes, for example, a memory 1010, a CPU 1020, a hard disk drive interface 1030, a disk drive interface 1040, and a network interface 1070, and these units are respectively connected by a bus 1080.

The memory 1010 includes, as illustrated in FIG. 16, a ROM (Read Only Memory) 1011 and a RAM (Random Access Memory) 1012. The ROM 1011 stores therein, for example, a boot program such as a BIOS (Basic Input Output System). The hard disk drive interface 1030 is connected to the hard disk drive 1031 as illustrated in FIG. 16. The disk drive interface 1040 is connected to the disk drive 1041 as illustrated in FIG. 16. For example, a detachable memory medium such as a magnetic disk or an optical disk is inserted into a disk drive.

As illustrated in FIG. 16, the hard disk drive 1031 stores therein, for example, an OS 1091, an application program 1092, a program module 1093, and program data 1094. That is, the detection program described above is stored in, for example, the hard disk drive 1031 as a program module in which a command to be executed by the computer 1000 is described.

Furthermore, the various pieces of data described in the embodiments described above are stored in, for example, the memory 1010 and the hard disk drive 1031 as program data. The CPU 1020 reads out the program module 1093 and the program data 1094 stored in the memory 1010 and the hard disk drive 1031 into the RAM 1012 as required to perform the respective processes.

The program module 1093 and the program data 1094 related to the detection program are not only stored in the hard disk drive 1031, but also can be stored in, for example, a detachable memory medium and read out by the CPU 1020 via a disk drive or the like. Alternatively, the program module 1093 and the program data 1094 related to the detection program can be stored in another computer connected via a network (a LAN (Local Area Network), a WAN (Wide Area Network), or the like), and read out by the CPU 1020 via the network interface 1070.

These embodiments and modifications thereof are included in the scope of the inventions described in the claims and equivalents thereof, similarly to a case where the embodiments and modifications are included in the techniques disclosed by the present application.

### Reference Signs List

- 5: Internet
- 10: service server
- 20: DB
- 30, 40: log acquisition device
- 31: request acquisition unit
- 41: query acquisition unit
- 50: unauthorized-access detection device
- 51: detection unit

## Claims

1. A detection device comprising:
a first acquisition unit that acquires first request information regarding a first request transmitted from a terminal operated by a user to a service server that provides a service;
a second acquisition unit that acquires second request information regarding a second request transmitted from the service server to an accumulation device that accumulates information regarding the service; and
a detection unit that detects the second request as unauthorized access to the accumulation device, when a relationship between the first request information and the second request information is different from a normal pattern.

2. The detection device according to claim 1, wherein
the first acquisition unit acquires a first reception time when the first request has been received by the service server as the first request information,
the second acquisition unit acquires a second reception time when the second request has been received by the accumulation device as the second request information, and
the detection unit compares the first reception time with the second reception time, and when the first reception time is not included in a predetermined time immediately before the second reception time, the detection unit regards the relationship between the first request information and the second request information as being different from the normal pattern to detect the second request corresponding to the second reception time as the unauthorized access.

3. The detection device according to claim 1, wherein the detection unit counts number of the first requests and number of the second requests received in a predetermined period, respectively, and when a ratio of the number of the second requests to the number of the first requests exceeds a predetermined threshold, the detection unit regards the relationship between the first request information and the second request information as being different from the normal pattern to detect the second request as the unauthorized access.

4. The detection device according to claim 2, further comprising a storage unit that stores therein information in which a body text pattern of the first request and a body text pattern of the second request to be transmitted when the first request is received by the service server are associated with each other, wherein
the first acquisition unit acquires the first reception time and a body text of the first request,
the second acquisition unit acquires the second reception time and a body text of the second request, and
the detection unit refers the storage unit, and when the first request in the body text pattern corresponding to the body text pattern of the second request acquired by the second acquisition unit has not been received in a predetermined time immediately before the reception time of the second request, the detection unit regards the relationship between the first request information and the second request information as being different from the normal pattern to detect the second request as the unauthorized access.

5. The detection device according to claim 3, further comprising a storage unit that stores therein information in which a body text pattern of the first request, a body text pattern of the second request to be transmitted when the first request is received by the service server, and a threshold are associated with each other, wherein
the first acquisition unit acquires the first reception time and a body text of the first request,
the second acquisition unit acquires the second reception time and a body text of the second request, and
the detection unit refers the storage unit and respectively counts number of second requests in a predetermined body text pattern received in a predetermined period and number of first requests corresponding to the predetermined body text pattern received in the predetermined period, and when a ratio of the number of second requests to the number of first requests exceeds a threshold corresponding to the predetermined body text pattern, the detection unit regards the relationship between the first request information and the second request information as being different from the normal pattern to detect the second request as the unauthorized access.

6. The detection device according to claim 2, wherein
the first acquisition unit acquires the first reception time and a body text of the first request,
the second acquisition unit acquires the second reception time and a body text of the second request, and
the detection unit specifies connection information for identifying the terminal connected to the service server from information of the user included in the second request, and when a first request including the specified connection information has not been received in a predetermined time immediately before the reception time of the second request, the detection unit regards the relationship between the first request information and the second request information as being different from the normal pattern to detect the second request as the unauthorized access.

7. A detection method executed by a detection device, the method comprising:
a first acquisition step of acquiring first request information regarding a first request transmitted from a terminal operated by a user to a service server that provides a service;
a second acquisition step of acquiring second request information regarding a second request transmitted from the service server to an accumulation device that accumulates information regarding the service; and
a detection step of detecting the second request as unauthorized access to the accumulation device, when a relationship between the first request information and the second request information is different from a normal pattern.

8. A detection program that causes a computer to execute:
a first acquisition step of acquiring first request information regarding a first request transmitted from a terminal operated by a user to a service server that provides a service;
a second acquisition step of acquiring second request information regarding a second request transmitted from the service server to an accumulation device that accumulates information regarding the service; and
a detection step of detecting the second request as unauthorized access to the accumulation device, when a relationship between the first request information and the second request information is different from a normal pattern.
